# EUROPÄISCHE PATENTSCHRIFT

(11) **EP 4 589 188 B1**
(45) Veröffentlichungstag und Bekanntmachung des Hinweises auf die Patenterteilung: **22.07.2026**
(21) Anmeldenummer: 25150782.8
(22) Anmeldetag: 08.01.2025
(51) Int. Cl.: F16M 11/38, F16M 11/10, H04M 1/04, G06F 1/16

(54) **STÄNDER FÜR EIN FLACHES ELEKTRONISCHES GERÄT**
STAND FOR A FLAT ELECTRONIC DEVICE
SUPPORT POUR UN APPAREIL ÉLECTRONIQUE PLAT

(30) Priorität: 17.01.2024 DE 102024101259
(43) Veröffentlichungstag der Anmeldung: 23.07.2025
(73) Patentinhaber: Leitz ACCO Brands GmbH & Co KG, 70469 Stuttgart (DE)
(72) Erfinder: Diesch, Leonie, 71409 Schwaikheim (DE); Schneider, Ulrich, 70563 Stuttgart (DE)
(74) Vertreter: Patentanwälte Bregenzer und Reule Partnerschaftsgesellschaft mbB

(56) Entgegenhaltungen:
- WO-A1-2013/190378
- CN-U- 202 561 382
- JP-U- 3 141 153

## Beschreibung

Die Erfindung betrifft einen Ständer für ein flaches elektronisches Gerät.

Solche Ständer dienen dem Aufstellen von flachen elektronischen Geräten, wie beispielsweise eines Laptops, eines Tablet-Computers oder eines Smartphones, auf einer Oberfläche, beispielsweise einer Schreibtischoberfläche. Sie kommen zum Einsatz, um das Gerät in einem Winkel zur Oberfläche aufstellen zu können, so dass es nicht horizontal auf der Oberfläche aufliegt. Auf diese Weise ist beispielsweise ein Bildschirm besser für den Betrachter sichtbar oder eine Tastatur besser bedienbar. Bekannte Ständer dieser Art sind aber oft voluminös und schwer zu transportieren, oder aber sie bieten dem Gerät nicht ausreichend Halt.

Es ist daher Aufgabe der Erfindung, einen Ständer für ein flaches elektronisches Gerät zu entwickeln, der besser handhabbar ist.

Diese Aufgabe wird erfindungsgemäß durch einen Ständer mit den Merkmalen des Anspruchs 1 gelöst. Vorteilhafte Weiterbildungen der Erfindung sind Gegenstand der abhängigen Ansprüche.

Der Erfindung liegt der Gedanke zugrunde, die drei wesentlichen Teile des Ständers, nämlich das Auflageelement, das Stützelement und das Verbindungselement, mittels der Gelenke, deren Schwenkachsen zweckmäßig im Abstand parallel zueinander und senkrecht zur Aufstellkante verlaufen, verschwenkbar miteinander zu verbinden, so dass unterschiedliche Gebrauchsstellungen mit unterschiedlichen Winkeln zwischen dem Auflageelement und dem Stützelement und damit auch unterschiedliche Winkel zwischen dem Auflageelement und dem auf dessen Auflagefläche ruhenden Gerät und der Fläche erreicht werden können, auf der der Ständer aufgestellt ist. Erfindungsgemäß ist vorgesehen, dass das Stützelement in jeder der Gebrauchsstellungen mit einer Auflagepartie aus der Auflagefläche vorsteht. Die Auflagepartie kann dazu dienen, eine Unterkante des Geräts auf ihr aufzustellen. Dabei ist weiter vorgesehen, dass mit der Auflagepartie eine Klappe mittels eines dritten Gelenks verschwenkbar verbunden ist, die in einer ersten Endstellung aus einer Vorderseite der Auflagepartie vorsteht und eine Anschlagfläche für die Unterkante des Geräts aufweist. Diese Ausgestaltung bietet eine einfache und effiziente Möglichkeit, dem Gerät einen sicheren Halt zu bieten. Die Vorderseite der Auflagepartie weist in der Transportstellung in dieselbe Richtung wie die Auflagefläche und fluchtet vorzugsweise mit ihr.

Wenn gemäß einer vorteilhaften Weiterbildung der Erfindung das Auflageelement rahmenförmig ausgebildet ist mit einem von der Auflagefläche umrandeten Durchbruch zur Aufnahme des Stützelements und des Verbindungselements in einer Transportstellung, kann der Ständer platzsparend zusammengeklappt werden, um ihn in der Transportstellung besser transportieren zu können. Dabei kann das Auflageelement einen geschlossenen Rahmen bilden, der den Durchbruch rings umrahmt, oder aber einen zu einer Seite hin offenen Rahmen, der den Durchbruch zu dieser Seite freilässt. Weiter kann das Verbindungselement U-förmig ausgebildet sein, so dass es in der Transportstellung das Stützelement an drei Seiten umrandet. Dabei weist das Stützelement vorteilhaft eine Endpartie und eine an die Endpartie anschließende, zweckmäßig einstückig mit ihr zusammenhängende Hauptpartie auf, die mittels des ersten Gelenks mit dem Auflageelement verbunden ist. Dabei ist die in einer Längsrichtung einer durch das erste Gelenk definierten Schwenkachse gemessene Breite der Hauptpartie größer als die Breite der Endpartie, so dass die Endpartie den Zwischenraum zwischen den Schenkeln des U der Verbindungspartie ausfüllt, während die Hauptpartie den Durchbruch des Auflageelements über einen Teil dessen Länge ausfüllt. Bei dem bevorzugten Ausführungsbeispiel wird des Weiteren bevorzugt, dass das Stützelement und das Verbindungselement höchstens so dick sind wie das Auflageelement, so dass sie vollständig im Durchbruch aufgenommen sind und nicht über die Auflagefläche und eine der Auflagefläche abgewandte Rückfläche des Auflageelements vorstehen. Die Dicke des Auflageelements wird zwischen der Auflagefläche und der Rückfläche gemessen. Die Klappe ist dabei zweckmäßig in einer Ruhestellung in einem Durchbruch in der Auflagepartie aufgenommen. In der Transportstellung steht sie dann nicht oder nur geringfügig über die Auflagefläche vor. Wenn sie, ebenso wie das Stützelement und das Verbindungselement, höchstens so dick ist wie das Auflageelement, steht sie in der Transportstellung nicht über die Auflagefläche vor, so dass der Ständer sehr flach zusammengelegt werden kann.

Es wird bevorzugt, dass das erste Gelenk in einem Abstand zur Aufstellkante angeordnet ist, der mindestens 15 %, insbesondere mindestens 20 %, und höchstens 30 % der zwischen der Aufstellkante und einer der Aufstellkante abgewandten Oberkante des Auflageelements gemessenen Länge des Auflageelements entspricht. Das Stützelement ist dann näher an der Aufstellkante angeordnet als an der Oberkante, so dass es in jeder der Gebrauchsstellungen im unteren Bereich des Auflageelements, aber im Abstand zu der Fläche, auf der der Ständer steht, angelenkt ist.

Zweckmäßig ist das Stützelement durch Eingriff des Vorsprungs in die Eingriffsöffnungen in mehreren weiteren Gebrauchsstellungen bezüglich des Auflageelements arretierbar, wobei das Stützelement in jeder der weiteren Gebrauchsstellungen mit der Auflagepartie aus einer der Auflagefläche abgewandten Rückfläche des Auflageelements vorsteht. Dabei wird weiter bevorzugt, dass die Klappe in einer zweiten Endstellung aus einer der Vorderseite abgewandten Rückseite der Auflagepartie vorsteht und eine weitere Anschlagfläche für die Unterkante des Geräts aufweist. In der Transportstellung weist die Rückseite in dieselbe Richtung wie die Rückfläche und fluchtet vorzugsweise mit ihr. Der Ständer ist dann aus der Transportstellung in beide Richtungen gleichermaßen symmetrisch aufklappbar. Insbesondere kann er so ausgebildet sein, dass er bezüglich einer in der Mitte zwischen der Auflagefläche und einer der Auflagefläche abgewandten Rückfläche verlaufenden Symmetrieebene symmetrisch ist. Zu jeder der Gebrauchsstellungen existiert eine bezüglich der Symmetrieebene symmetrisch zu ihr angeordnete weitere Gebrauchsstellung.

An der Klappe kann vorteilhaft ein erstes rutschhemmendes Element angeordnet sein, das zumindest einen Teil der Anschlagfläche und/oder der weiteren Anschlagfläche bedeckt, um ein Abrutschen des Geräts zu hemmen. Das erste rutschhemmende Element ist vorzugsweise aus Gummi gefertigt, der einen hohen Reibungskoeffizienten aufweist. Zweckmäßig ist die Aufstellkante mit mindestens einem vorzugsweise aus Gummi gefertigten zweiten rutschhemmenden Element versehen, das ein Verrutschen des Ständers auf der Fläche hemmt. Zudem ist das Stützelement vorteilhaft an einem in den Gebrauchsstellungen aus der Rückfläche vorstehenden Ende mit einem vorzugsweise aus Gummi gefertigten dritten rutschhemmenden Element versehen, das ein Verrutschen des Ständers auf der Fläche ebenfalls hemmt. Um die Einzelteile des Ständers in der Transportstellung zu halten, ist zudem vorteilhaft das Auflageelement am Durchbruch mit einem vorzugsweise aus Gummi gefertigten Reibelement zur Herstellung eines Reibschlusses mit dem Verbindungselement in der Transportstellung versehen.

Im Folgenden wird die Erfindung anhand eines in der Zeichnung schematisch dargestellten Ausführungsbeispiels näher erläutert. Es zeigen
- Fig. 1: einen Ständer in Transportstellung in Draufsicht;
- Fig. 2: den Ständer gemäß Fig. 1 in einer Gebrauchsstellung;
- Fig. 3: den Ständer gemäß Fig. 1, 2 in einer anderen Gebrauchsstellung und
- Fig. 4: den Ständer gemäß Fig. 1 bis 3 in der Gebrauchsstellung gemäß Fig. 3 mit der Klappe in ihrer Ruhestellung.

Der in der Zeichnung dargestellte Ständer 10 dient dem Aufstellen eines Laptops oder eines Tablet-Computers auf einer Fläche, beispielsweise auf einer Schreibtischoberfläche. Es versteht sich von selbst, dass der Ständer 10 durch geeignete Variation seiner Größe auch so gestaltet werden kann, dass er für ein kleineres elektronisches Gerät, wie beispielsweise ein Smartphone, geeignet ist.

Der Ständer 10 weist ein Auflageelement 12 mit einer vorderseitigen Auflagefläche 14 und einer der Auflagefläche 14 abgewandten rückseitigen Rückfläche 16 auf. Das Auflageelement 12 weist eine Aufstellkante 18 zum Aufstellen auf der Fläche auf sowie eine der Aufstellkante 18 abgewandte Oberkante 20. Zwischen der Aufstellkante 18 und der Oberkante 20 wird die Länge des Auflageelements 12 gemessen. Mittels eines ersten Gelenks 22 ist ein Stützelement 24 verschwenkbar mit dem Auflageelement 12 verbunden. Mittels eines zweiten Gelenks 26 ist ein Verbindungselement 28 ebenfalls gelenkig mit dem Auflageelement 12 verbunden, wobei die Schwenkachsen der Gelenke 22, 26 im Abstand parallel zueinander und senkrecht zur Aufstellkante 18 und zur Oberkante 20 verlaufen. Das zweite Gelenk 26 ist dabei im Abstand zum ersten Gelenk 22 angeordnet, nämlich näher an der Oberkante 20. Das erste Gelenk 22 ist dagegen nahe der Aufstellkante 18 angeordnet, nämlich in einem Abstand zu dieser, der ca. 20 % bis 25 % der Länge des Auflageelements 12 entspricht.

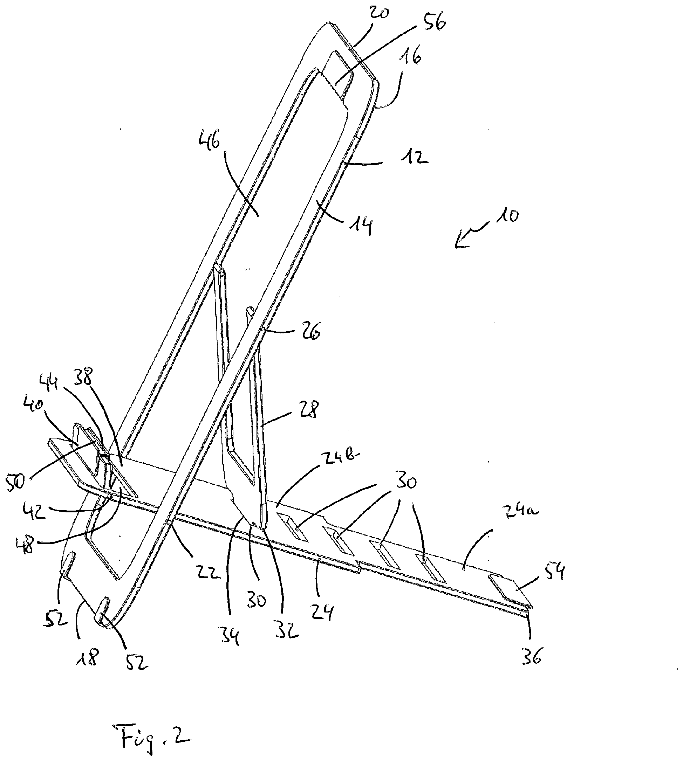

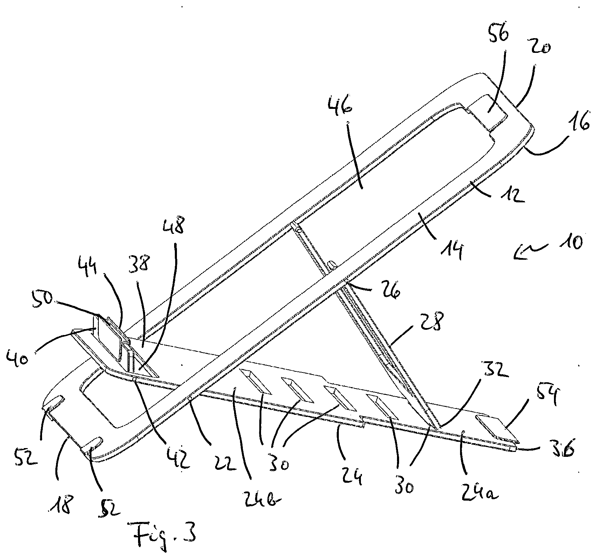

Im Stützelement 24 ist eine Anzahl von durchgehenden, sich über die gesamte Dicke des Stützelements 24 erstreckenden Eingriffsöffnungen 30 angeordnet, im vorliegenden Fall fünf längliche Eingriffsöffnungen 30, während am dem zweiten Gelenk 26 abgewandten Ende 32 des Verbindungselements 28 ein Vorsprung 34 angeordnet ist, der dazu bestimmt ist, in die Eingriffsöffnungen 30 einzugreifen. Beim gezeigten Ausführungsbeispiel erstreckt sich der Vorsprung 34 nicht über die gesamte Breite des Verbindungselements 28. Der Vorsprung 34 kann aber auch durch das Ende 32 des Verbindungselements 28 gebildet werden, wenn dieses entsprechend schmal ausgebildet ist. Durch Eingreifen des Vorsprungs 34 in eine der Eingriffsöffnungen 30 kann das Stützelement 24 in einer Anzahl unterschiedlicher Winkel bezüglich des Auflageelements 12 fixiert werden, die der Anzahl der Eingriffsöffnungen 30 entspricht. Diese Stellungen des Ständers 10 werden im Folgenden als Gebrauchsstellungen bezeichnet. In jeder der Gebrauchsstellungen steht ein Ende 36 des Stützelements 24 aus der Rückfläche 16 vor und spannt mit der Aufstellkante 18 eine Fläche auf, die beim Aufstellen des Ständers 10 auf einer Schreibtischoberfläche mit dieser in Deckung gebracht wird. Dem Ende 36 abgewandt weist das Stützelement 24 eine Auflagepartie 38 auf, die dem Aufstellen des Tablet-Computers oder des Laptops mit seiner Unterkante dient, wenn dieses Gerät auf die Auflagefläche 14 aufgelegt wird. An der Auflagepartie 38 ist eine Klappe 40 mittels eines dritten Gelenks 42 angelenkt, die eine Anschlagfläche 44 aufweist, an der das auf der Auflagefläche 14 aufliegende Gerät anliegt, so dass es nicht über die Auflagepartie 38 hinaus abrutschen kann, wenn sich die Klappe 40 in einer in Fig. 2, 3 gezeigten ersten Endstellung befindet, in der sie aus einer Vorderseite der Auflagepartie 38 vorsteht.

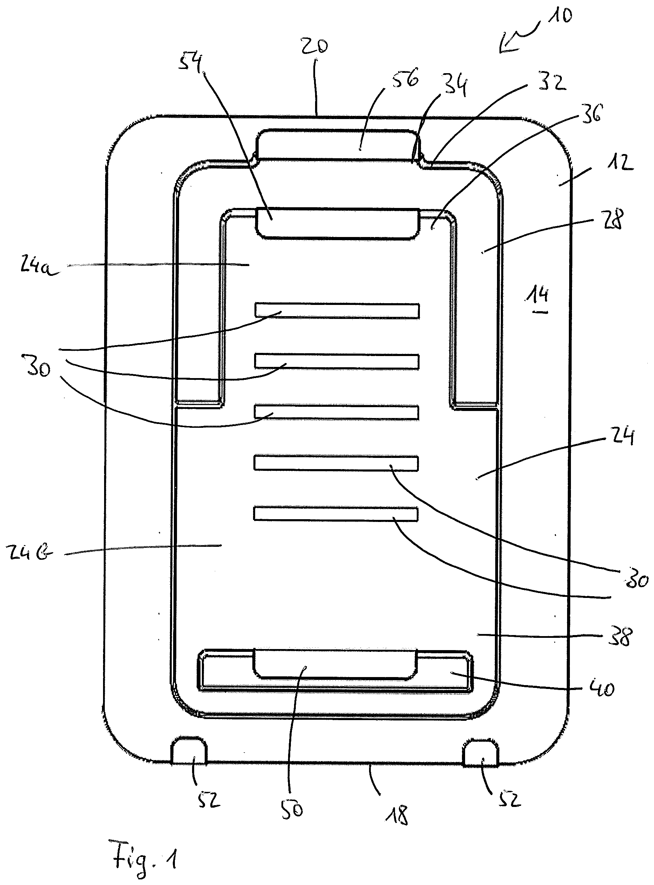

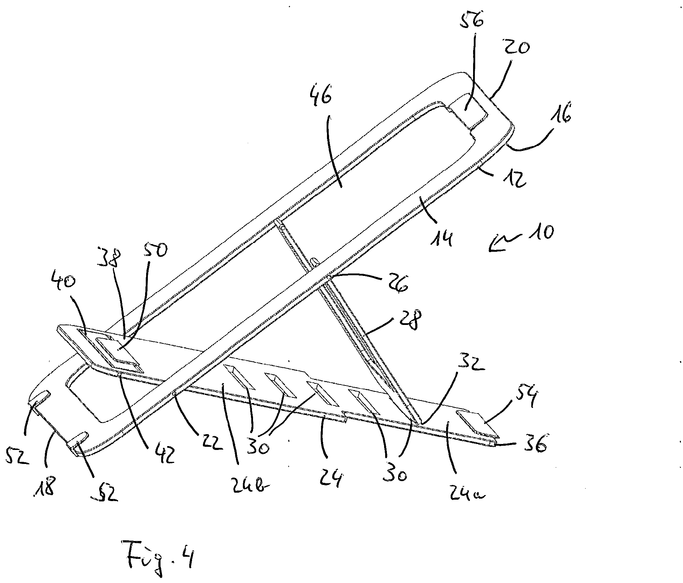

In der in Fig. 1 gezeigten Transportstellung ist der Ständer 10 flach zusammengelegt. Zu diesem Zweck weist das Auflageelement 12 einen Durchbruch 46 auf, um den die Auflagefläche 14 beim gezeigten Ausführungsbeispiel rings umläuft. In diesem Durchbruch 46 sind das Stützelement 24 und das Verbindungselement 28 in der Transportstellung aufgenommen. Das Stützelement 28 ist U-förmig und nimmt in der Transportstellung eine vom Ende 36 ausgehende Endpartie 24a des Stützelements 24 zwischen den Schenkeln des U auf, die, gemessen in der Längsrichtung der Schwenkachsen der Gelenke 22, 26, eine geringere Breite aufweist als eine an sie anschließende Hauptpartie 24b des Stützelements 24. Die zwischen der Auflagefläche 14 und der Rückfläche 16 gemessene Dicke des Auflageelements 12 ist dabei mindestens so groß und vorzugsweise ungefähr exakt so groß wie die Dicke des Stützelements 24 und des Verbindungselements 28, so dass letztere weder über die Auflagefläche 14 noch über die Rückfläche 16 überstehen. Ein weiterer Durchbruch 48 in der Auflagepartie 38 dient der Aufnahme der Klappe 40 in einer Ruhestellung, wie auch in Fig. 4 dargestellt. Auch die Dicke der Klappe 40 ist nicht größer und vorzugsweise ungefähr so groß wie die Dicke des Auflageelements 12, so dass auch die Klappe 40 in der Transportstellung weder über die Auflagefläche 14 noch über die Rückfläche 16 vorsteht. In der Transportstellung fluchtet die Vorderseite der Auflagepartie 38 mit der Auflagefläche 14.

Die Klappe 40 ist zudem mit einem ersten rutschhemmenden Element 50 aus Gummi versehen, das die Anschlagfläche 44 teilweise bedeckt und ein Abrutschen des an der Anschlagfläche 44 anliegenden Geräts hemmt. Zudem stellt das erste rutschhemmende Element 50 in der Transportstellung einen Reibschluss mit dem Rand des weiteren Durchbruchs 48 her, so dass die Klappe 40 in ihrer Ruhestellung festgehalten wird. Die Aufstellkante 18 wird von zwei im Abstand zueinander angeordneten zweiten rutschhemmenden Elementen 52 aus Gummi umgriffen, die ein Abrutschen des Ständers 10 auf der Schreibtischoberfläche hemmen. Auf dieselbe Weise wird das Ende 36 des Stützelements 24 von einem dritten rutschhemmenden Element 54 aus Gummi umgriffen, das ein Abrutschen des Endes 36 auf der Schreibtischoberfläche hemmt. In der Transportstellung stellt das dritte rutschhemmende Element 54 zudem einen Reibschluss mit dem Verbindungselement 28 her und hält das Stützelement 24 in der Transportstellung. Schließlich ist an einem Randabschnitt des Durchbruchs 46, der parallel zur Oberkante 20 verläuft, ein Reibelement 56 aus Gummi angeordnet, das in der Transportstellung einen Reibschluss mit dem Verbindungselement 28 herstellt und dieses in der Transportstellung hält.

Der Ständer 10 kann zudem in fünf in der Zeichnung nicht dargestellte weitere Gebrauchsstellungen gebracht werden, indem das Stützelement 24 und das Verbindungselement 28 in die andere Richtung gegenüber dem Auflageelement 12 verschwenkt werden. Dann steht das Ende 36 aus der Auflagefläche 14 vor und die Auflagepartie 38 steht aus der Rückfläche 16 vor, auf die dann das Gerät aufgelegt wird. Auch die Klappe 40 wird in die andere Richtung aus der Auflagepartie 38 in eine zweite Endstellung verschwenkt und steht dann aus einer der Vorderseite abgewandten Rückseite der Auflagepartie 38 vor, die in der Transportstellung mit der Rückfläche 16 fluchtet, und bildet dort eine weitere Anschlagfläche für das Gerät, die wiederum teilweise vom ersten rutschhemmenden Element 50 bedeckt wird. Auch in den weiteren Gebrauchsstellungen wird das Stützelement durch Eingriff des Vorsprungs 34 in eine der Eingriffsöffnungen 30 bezüglich des Auflageelements 12 fixiert.

Zusammenfassend ist folgendes festzuhalten: Die Erfindung betrifft einen Ständer 10 für ein flaches elektronisches Gerät, beispielsweise für einen Laptop, einen Tablet-Computer oder ein Smartphone, mit einem eine Auflagefläche 14 für das Gerät sowie eine Aufstellkante 18 zum Aufstellen auf einer Fläche aufweisenden Auflageelement 12, mit einem mittels eines ersten Gelenks 22 verschwenkbar mit dem Auflageelement 12 verbundenen Stützelement 24 und mit einem mittels eines zweiten Gelenks 26 verschwenkbar mit dem Auflageelement 12 verbundenen Verbindungselement 28, wobei das Stützelement 24 mehrere im Abstand zueinander angeordnete Eingriffsöffnungen 30 aufweist und wobei das Verbindungselement 28 an seinem dem zweiten Gelenk 26 abgewandten Ende 36 einen Vorsprung 34 zum Eingreifen in die Eingriffsöffnungen 30 aufweist, so dass das Stützelement 24 in mehreren Gebrauchsstellungen bezüglich des Auflageelements 12 arretierbar ist, wobei unterschiedliche Gebrauchsstellungen durch unterschiedliche Winkel zwischen dem Auflageelement 12 und dem Stützelement 24 definiert sind.

## Patentansprüche

1. Ständer für ein flaches elektronisches Gerät, beispielsweise für einen Laptop, einen Tablet-Computer oder ein Smartphone, mit einem eine Auflagefläche (14) für das Gerät sowie eine Aufstellkante (18) zum Aufstellen auf einer Fläche aufweisenden Auflageelement (12), mit einem mittels eines ersten Gelenks (22) verschwenkbar mit dem Auflageelement (12) verbundenen Stützelement (24) und mit einem mittels eines zweiten Gelenks (26) verschwenkbar mit dem Auflageelement (12) verbundenen Verbindungselement (28), wobei das Stützelement (24) mehrere im Abstand zueinander angeordnete Eingriffsöffnungen (30) aufweist, wobei das Verbindungselement (28) an seinem dem zweiten Gelenk (26) abgewandten Ende (36) einen Vorsprung (34) zum Eingreifen in die Eingriffsöffnungen (30) aufweist, so dass das Stützelement (24) in mehreren Gebrauchsstellungen bezüglich des Auflageelements (12) arretierbar ist, wobei unterschiedliche Gebrauchsstellungen durch unterschiedliche Winkel zwischen dem Auflageelement (12) und dem Stützelement (24) definiert sind, wobei das Stützelement (24) in jeder der Gebrauchsstellungen mit einer Auflagepartie (38) aus der Auflagefläche (14) vorsteht und **dadurch gekennzeichnet, dass** mit der Auflagepartie (38) eine Klappe (40) mittels eines dritten Gelenks (42) verschwenkbar verbunden ist, die in einer ersten Endstellung aus einer Vorderseite der Auflagepartie (38) vorsteht und eine Anschlagfläche (44) für eine Unterkante des Geräts aufweist.

2. Ständer nach Anspruch 1, **dadurch gekennzeichnet, dass** das Auflageelement (12) rahmenförmig ausgebildet ist mit einem von der Auflagefläche (14) umrandeten Durchbruch (46) zur Aufnahme des Stützelements (24) und des Verbindungselements (28) in einer Transportstellung.

3. Ständer nach Anspruch 2, **dadurch gekennzeichnet, dass** das Verbindungselement (28) U-förmig ausgebildet ist und in der Transportstellung das Stützelement (24) an drei Seiten umrandet.

4. Ständer nach Anspruch 3, **dadurch gekennzeichnet, dass** das Stützelement (24) eine Endpartie (24a) und eine mittels des ersten Gelenks (22) mit dem Auflageelement (12) verbundene Hauptpartie (24b) aufweist, wobei die in Längsrichtung einer durch das erste Gelenk (22) definierten Schwenkachse gemessene Breite der Hauptpartie (24b) größer ist als die Breite der Endpartie (24a) und dass die Endpartie (24a) in der Transportstellung zwischen den Schenkeln des U des Verbindungselements (28) aufgenommen ist.

5. Ständer nach einem der Ansprüche 2 bis 4, **dadurch gekennzeichnet, dass** das Stützelement (24) und das Verbindungselement (28) höchstens so dick sind wie das Auflageelement (12).

6. Ständer nach einem der vorangehenden Ansprüche, **dadurch gekennzeichnet, dass** das erste Gelenk (22) in einem Abstand zur Aufstellkante (18) angeordnet ist, der mindestens 15 %, insbesondere mindestens 20 %, und höchstens 30 % der zwischen der Aufstellkante (18) und einer der Aufstellkante (18) abgewandten Oberkante (20) des Auflageelements (12) gemessenen Länge des Auflageelements (12) entspricht.

7. Ständer nach einem der vorangehenden Ansprüche, **dadurch gekennzeichnet, dass** die Klappe (40) in einer Ruhestellung in einem Durchbruch (48) in der Auflagepartie (38) aufgenommen ist.

8. Ständer nach einem der vorangehenden Ansprüche, **dadurch gekennzeichnet, dass** die Klappe (40) höchstens so dick ist wie das Auflageelement (12).

9. Ständer nach einem der vorangehenden Ansprüche, **dadurch gekennzeichnet, dass** das Stützelement (24) durch Eingriff des Vorsprungs (34) in die Eingriffsöffnungen (30) in mehreren weiteren Gebrauchsstellungen bezüglich des Auflageelements (12) arretierbar ist, wobei das Stützelement (24) in jeder der weiteren Gebrauchsstellungen mit der Auflagepartie (38) aus einer der Auflagefläche (14) abgewandten Rückfläche (16) des Auflageelements (12) vorsteht.

10. Ständer nach Anspruch 9, **dadurch gekennzeichnet, dass** die Klappe (40) in einer zweiten Endstellung aus einer der Vorderseite abgewandten Rückseite der Auflagepartie (38) vorsteht und eine weitere Anschlagfläche für die Unterkante des Geräts aufweist.

11. Ständer nach einem der vorangehenden Ansprüche, **dadurch gekennzeichnet, dass** an der Klappe (40) ein vorzugsweise aus Gummi gefertigtes erstes rutschhemmendes Element (50) angeordnet ist, das zumindest einen Teil der Anschlagfläche (44) und/oder der weiteren Anschlagfläche bedeckt.

12. Ständer nach einem der vorangehenden Ansprüche, **dadurch gekennzeichnet, dass** die Aufstellkante (18) mit mindestens einem vorzugsweise aus Gummi gefertigten zweiten rutschhemmenden Element (52) versehen ist.

13. Ständer nach einem der vorangehenden Ansprüche, **dadurch gekennzeichnet, dass** das Stützelement (24) an einem in den Gebrauchsstellungen aus einer der Auflagefläche (14) abgewandten Rückfläche (16) vorstehenden Ende (36) mit einem vorzugsweise aus Gummi gefertigten dritten rutschhemmenden Element (54) versehen ist.

14. Ständer nach einem der Ansprüche 2 bis 13, **dadurch gekennzeichnet, dass** das Auflageelement (12) am Durchbruch (46) mit einem vorzugsweise aus Gummi gefertigten Reibelement (56) zur Herstellung eines Reibschlusses mit dem Verbindungselement (28) in der Transportstellung versehen ist.

## Claims

1. Stand for a flat electronic device, for example for a laptop, a tablet computer or a smartphone, having a bearing element (12) comprising a bearing surface (14) for the device and a standing edge (18) for standing on a surface, having a supporting element (24) which is connected to the bearing element (12) pivotably by means of a first joint (22), and having a connecting element (28) which is connected to the bearing element (12) pivotably by means of a second joint (26), wherein the supporting element (24) has a plurality of engagement openings (30) arranged at a distance from one another, wherein the connecting element (28) has, at its end (36) facing away from the second joint (26), a projection (34) for engaging into the engagement openings (30), so that the supporting element (24) can be locked in several positions of use with respect to the bearing element (12), wherein different positions of use are defined by different angles between the bearing element (12) and the supporting element (24), wherein the supporting element (24) protrudes from the bearing surface (14) by way of a bearing part (38) in each of the positions of use and **characterized in that** a flap (40) is connected to the bearing part (38) pivotably by means of a third joint (42) and protrudes from a front side of the bearing part (38) in a first end position and has a stop surface (44) for a lower edge of the device.

2. Stand according to Claim 1, **characterized in that** the bearing element (12) is of frame-like design with an aperture (46), which is surrounded by the bearing surface (14), for receiving the supporting element (24) and the connecting element (28) in a transport position.

3. Stand according to Claim 2, **characterized in that** the connecting element (28) is of U-shaped design and surrounds the supporting element (24) on three sides in the transport position.

4. Stand according to Claim 3, **characterized in that** the supporting element (24) has an end part (24a) and a main part (24b) connected to the bearing element (12) by means of the first joint (22), wherein the width of the main part (24b) measured in the longitudinal direction of a pivoting axis defined by the first joint (22) is greater than the width of the end part (24a), and **in that** the end part (24a) is received between the limbs of the U of the connecting element (28) in the transport position.

5. Stand according to any of Claims 2 to 4, **characterized in that** the supporting element (24) and the connecting element (28) are at most as thick as the bearing element (12).

6. Stand according to any of the preceding claims, **characterized in that** the first joint (22) is arranged at a distance from the standing edge (18) that corresponds to at least 15%, in particular at least 20%, and at most 30%, of the length of the bearing element (12) measured between the standing edge (18) and an upper edge (20) of the bearing element (12) facing away from the standing edge (18).

7. Stand according to any of the preceding claims, **characterized in that** the flap (40) is received in an aperture (48) in the bearing part (38) in an inoperative position.

8. Stand according to any of the preceding claims, **characterized in that** the flap (40) is at most as thick as the bearing element (12).

9. Stand according to any of the preceding claims, **characterized in that** the supporting element (24) can be locked by engagement of the projection (34) into the engagement openings (30) in several further positions of use with respect to the bearing element (12), wherein the supporting element (24) protrudes by way of the bearing part (38) from a rear surface (16) of the bearing element (12) facing away from the bearing surface (14) in each of the further positions of use.

10. Stand according to Claim 9, **characterized in that** the flap (40) protrudes from a rear side of the bearing part (38) facing away from the front side in a second end position and has a further stop surface for the lower edge of the device.

11. Stand according to any of the preceding claims, **characterized in that** a first anti-slip element (50) preferably made of rubber is arranged on the flap (40) and covers at least a portion of the stop surface (44) and/or the further stop surface.

12. Stand according to any of the preceding claims, **characterized in that** the standing edge (18) is provided with at least one second anti-slip element (52) preferably made of rubber.

13. Stand according to any of the preceding claims, **characterized in that** the supporting element (24) is provided with a third anti-slip element (54) preferably made of rubber at an end (36) protruding from a rear surface (16) facing away from the bearing surface (14) in the positions of use.

14. Stand according to any of Claims 2 to 13, **characterized in that** the bearing element (12) is provided, at the aperture (46), with a friction element (56) preferably made of rubber for establishing a frictional connection with the connecting element (28) in the transport position.

## Revendications

1. Support pour un appareil électronique plat, par exemple pour un laptop, un ordinateur tablette ou un téléphone intelligent, présentant un élément d'appui (12) présentant une surface d'appui (14) pour l'appareil ainsi qu'un bord d'installation (18) pour l'installation sur une surface, présentant un élément de soutien (24) relié de manière pivotante au moyen d'une première articulation (22) à l'élément d'appui (12) et présentant un élément de liaison (28) relié de manière pivotante au moyen d'une deuxième articulation (26) à l'élément d'appui (12), l'élément de soutien (24) présentant plusieurs ouvertures de mise en prise (30) agencées à une certaine distance les unes des autres, l'élément de liaison (28) présentant, au niveau de son extrémité (36) opposée à la deuxième articulation (26), une saillie (34) destinée à venir en prise dans les ouvertures de mise en prise (30) de telle sorte que l'élément de soutien (24) peut être bloqué dans plusieurs positions d'utilisation par rapport à l'élément d'appui (12), les différentes positions d'utilisation étant définies par des angles différents entre l'élément d'appui (12) et l'élément de soutien (24), l'élément de soutien (24) étant en saillie, dans chacune des positions d'utilisation, avec une partie d'appui (38) par rapport à la surface d'appui (14) et **caractérisé en ce qu'**un clapet (40) est relié de manière pivotante au moyen d'une troisième articulation (42) à la partie d'appui (38), lequel clapet est en saillie, dans une première position d'extrémité, par rapport à la face avant de la partie d'appui (38) et présente une surface de butée (44) pour un bord inférieur de l'appareil.

2. Support selon la revendication 1, **caractérisé en ce que** l'élément d'appui (12) est conçu en forme de cadre présentant un percement (46) entouré par la surface d'appui (14) et destiné à recevoir l'élément de soutien (24) et l'élément de liaison (28) dans une position de transport.

3. Support selon la revendication 2, **caractérisé en ce que** l'élément de liaison (28) est conçu en forme de U et entoure, dans la position de transport, l'élément de soutien (24) sur trois côtés.

4. Support selon la revendication 3, **caractérisé en ce que** l'élément de soutien (24) présente une partie extrémité (24a) et une partie principale (24b) reliée au moyen de la première articulation (22) à l'élément d'appui (12), la largeur de la partie principale (24b) mesurée dans la direction longitudinale d'un axe de pivotement défini par la première articulation (22) étant supérieure à la largeur de la partie extrémité (24a) et **en ce que** la partie extrémité (24a) est logée, dans la position de transport, entre les branches du U de l'élément de liaison (28).

5. Support selon l'une des revendications 2 à 4, **caractérisé en ce que** l'élément de soutien (24) et l'élément de liaison (28) présentent au plus la même épaisseur que celle de l'élément d'appui (12).

6. Support selon l'une des revendications précédentes, **caractérisé en ce que** la première articulation (22) est agencée à une distance du bord d'installation (18) qui correspond à au moins 15%, en particulier à au moins 20% et au plus à 30% de la longueur de l'élément d'appui (12) mesurée entre le bord d'installation (18) et un bord supérieur (20) de l'élément d'appui (12) opposé au bord d'installation (18).

7. Support selon l'une des revendications précédentes, **caractérisé en ce que** le clapet (40) est logé, dans une position de repos, dans un percement (48) dans la partie d'appui (38).

8. Support selon l'une des revendications précédentes, **caractérisé en ce que** le clapet (40) présente au plus la même épaisseur que celle de l'élément d'appui (12).

9. Support selon l'une des revendications précédentes, **caractérisé en ce que** l'élément de soutien (24) peut être bloqué par mise en prise de la saillie (34) dans les ouvertures de mise en prise (30) dans plusieurs autres positions d'utilisation par rapport à l'élément d'appui (12), l'élément de soutien (24) étant en saillie, dans chacune des autres positions d'utilisation, avec la partie d'appui (38) par rapport à une surface arrière (16) de l'élément d'appui (12) opposée à la surface d'appui (14).

10. Support selon la revendication 9, **caractérisé en ce que** le clapet (40) est en saillie, dans une deuxième position d'extrémité, par rapport à une face arrière de la partie d'appui (38) opposée à la face avant et présente une autre surface de butée pour le bord inférieur de l'appareil.

11. Support selon l'une des revendications précédentes, **caractérisé en ce qu'**un premier élément (50) empêchant le glissement, de préférence réalisé en caoutchouc, est agencé au niveau du clapet (40), lequel élément recouvre au moins une partie de la surface de butée (44) et/ou de l'autre surface de butée.

12. Support selon l'une des revendications précédentes, **caractérisé en ce que** le bord d'installation (18) est pourvu d'au moins un deuxième élément (52) empêchant le glissement, de préférence réalisé en caoutchouc.

13. Support selon l'une des revendications précédentes, **caractérisé en ce que** l'élément d'appui (24) est pourvu, au niveau d'une extrémité (36) en saillie, dans les positions d'utilisation, par rapport à une surface arrière (16) opposée à la surface d'appui (14), d'un troisième élément (54) empêchant le glissement, de préférence réalisé en caoutchouc.

14. Support selon l'une des revendications 2 à 13, **caractérisé en ce que** l'élément d'appui (12) est pourvu, au niveau du percement (46), d'un élément de frottement (56), de préférence réalisé en caoutchouc, pour la réalisation d'une liaison par frottement avec l'élément de liaison (28) dans la position de transport.
